# EUROPEAN PATENT APPLICATION

(11) **EP 4 645 617 A1**
(43) Date of publication of application: **05.11.2025**
(21) Application number: 24173040.7
(22) Date of filing: 29.04.2024
(51) Int. Cl.: H02G 15/04, H02G 1/14, H02G 1/10, H02G 1/08

(54) **END-SEALING METHOD FOR A SUBSEA CABLE**

(71) Applicant: DEME Offshore NL B.V., 4817 ZG Breda (NL)
(72) Inventor: de Vries, Stijn Jochem, 4817 MN Breda (NL); Rabaut, Dieter Wim J., 9000 Gent (BE)
(74) Representative: IP HILLS NV

(57) **Abstract**

An end-sealing method for a subsea transmission cable, comprising:
- providing a cable (106) comprising a cut-off end (100) with an exposed transverse section (101);
- providing a cap (200) comprising a cap surface (203);
- performing a first set of steps, comprising:
o mounting the cap (200) with its open side (204) onto the cable end (100);
o applying a first sealant (601) inside the cap (200);
resulting in the first sealant (601) being shielded by the mounted cap (200), and the transverse section (101) being at least partially covered with the first sealant (601);
- performing a second set of steps, comprising:
o applying means for sealing (602) onto an outer surface (800) of the cable shell (102); and/or
o applying means for sealing onto an inner surface of the cap (200);
resulting in the mounted cap (200) being sealed with respect to the cable shell (102).

## Description

### Field of the Invention

The present invention generally relates to a sealing method for subsea transmission cables, in particular subsea power cables, in view of preventing seawater from intruding the cable cores via a cut-off cable end during a pull-in operation in an offshore wind farm. In particular, an end-sealing method is presented that allows for a fast and generally applicable sealing process, and results in a reliable and robust watertight cable seal.

### Background of the Invention

In an offshore wind farm, high voltage submarine power cables are installed to build an infield cable network. Such infield cables, also referred to as inter array cables, are laid between the wind turbines, and connect the wind turbines to the offshore transformer station. A subsea power cable typically comprises multiple cores, each core comprising an electrical conductor, wherein layers of sheathing and armouring encase the assembly of cores. For the pull-in operation of the cables, wherein the wind turbine or substation is provided with the submarine power cable, the cables are cut to size. This results in cut-off cable ends wherein the cable cores are exposed. To prevent seawater from intruding the cable cores during the pull-in operation, the cut-off cable ends are provided with a temporary seal. In a later stage, after the pull-in operation, the watertight seal is typically removed again.

In a classical approach, the exposed cut-off cable end is sealed by providing each individual cable core with a heat shrink end cap or a cold shrink end cap. For this purpose, the armouring and sheathing layers of the cable first need to be removed or stripped over a certain length, thereby exposing portions of the individual cores and allowing the end caps to be mounted. This results in a time-consuming sealing procedure, wherein it takes about 1,5 to 2 hours of operational time to seal one cable end, thereby limiting the amount of inter array cables that can be installed in a certain time span.

WO2019/199164A1 discloses a method for watertightly sealing off an exposed cut-off end of a subsea cable, that allows for a faster sealing procedure than the abovementioned classical approach. In the method, a mouldable sealant is applied to the exposed cut-off end, after which the sealant is cured or set to obtain the watertight seal. For example, a sealant comprising a glue is smeared onto the exposed end surface of the cable, after which the glue is set or hardened, such that the glue is not mouldable anymore. In another embodiment, the sealant comprises a foam, wherein the foam is hardened or set into a solid material. In any of the embodiments, the curing or setting may e.g. happen by drying, by evaporation of a component of the sealant, or by a chemical reaction e.g. with air. After curing or setting, the end surface of the cut-off cable is covered with a hardened, solid sealing material, thereby preventing water from entering the cable. Although the disclosed method allows for a fast sealing procedure, the quality and reliability of the obtained seal highly depends on the hardening process; proper curing or setting must ensure the watertightness of the seal, and must ensure the required robustness to prevent damaging or release of sealing material into the water. Therefore, use of specifically adapted sealing materials may be required, as well as creation of the right specific conditions when applying the seal.

It is an objective of the present invention to disclose a solution for that resolves one or more of the above-described shortcomings of the prior art solutions. More particularly, it is an objective to present an end-sealing method for a subsea cable, that allows for a fast and generally applicable sealing process, and that results in a reliable and robust watertight cable seal.

### Summary of the Invention

According to a first aspect of the present invention, the above identified objectives are realized by an end-sealing method for a subsea transmission cable, defined by claim 1, the method comprising:
- providing a cable suitable for subsea installation, comprising one or more cores encased by an outer shell, the cores suitable for transmission of power or signals, and the cable being cut to length such that it comprises a cut-off end with an exposed transverse section;
- providing a cap, the cap comprising a cap surface and having an open end at least at one side;
- performing a first set of steps, comprising:
   ∘ mounting the cap with its open side onto the cut-off cable end, such that the cap surface is at least partially placed around the cable shell;
   ∘ applying a first sealant inside the cap;
   wherein the first set of steps results in the first sealant being shielded by the mounted cap, due to closing off any aperture in the cap surface or the cap surface not having any such aperture, and the transverse section of the cut-off end being at least partially covered with the first sealant;
- performing a second set of steps, comprising:
   ∘ applying means for sealing onto an outer surface of the cable shell, and/or onto a layer covering an outer surface of the cable shell; and/or
   ∘ applying means for sealing onto an inner surface of the cap;
   wherein any of the steps of the second set is performed before or after the first set, or between subsequent steps of the first step, thereby resulting in the mounted cap being sealed with respect to the cable shell.

Thus, the invention concerns a method for sealing a cut-off end of a subsea transmission cable. A subsea cable or submarine cable is a cable that is suitable to be installed underwater, wherein it is laid on the seabed or buried in the seabed. The subsea transmission cable may be a subsea power cable, suitable for the transmission of power, typically the transport of electric current at high voltage. For example, it is an infield cable or inter array cable, laid between the wind turbines in an infield cable network of an offshore wind farm.

The subsea transmission cable comprises one or more cores. In a subsea power cable, one or more cores are present that comprise an electrical conductor, for transmission of power. Apart from the electric core(s), the subsea power cable may carry one or more other types of cores, e.g. optical fibre cores suitable for the transmission of data, temperature measurements or other types of signals. In another embodiment, the subsea transmission cable may be a subsea communication cable, e.g. using fibre optic technology to transmit communication signals. The subsea transmission cable further comprises an outer shell, which encases or surrounds the assembly of one or more cable cores. The outer shell may also be referred to as outer casing, outer jacket or cable shell. Typically, the outer shell comprises multiple layers, e.g. layers of sheathing and/or armouring.

The subsea transmission cable, provided at the start of the end-sealing method, comprises a cut-off end. This implies that, before starting the sealing method, the cable has been cut to length, e.g. for obtaining the required cable length in view of a subsequent pull-in operation in an offshore wind farm. The cut-off cable end comprises an exposed transverse section, i.e. the transverse face of the cable end is not covered by the cable shell. Typically, the one or more cores are exposed in the transverse section, i.e. their end is not covered but in direct contact with the environment. The cable extends according to a length direction, and the side of the cable where the exposed transverse section is found, is referred to as the front side or front end.

The end-sealing method comprises providing a cap. A cap is defined as a hollow component suitable for placing over another element, thereby at least partially covering up the other element. It may also be referred to as a cover, covering, shell, casing, housing or end cap. The cap comprises a cap surface, wherein the cap surface encloses the inner cavity of the hollow cap. The cap extends between a first side, referred to as the back side, and a second side, referred to as the front side, the second side being opposite to the first side. The cap comprises at least one open end, at its back side, suitable for placing the cap over the cut-off cable end. In an embodiment, the cap surface may be a continuous, uninterrupted surface, without any apertures being provided in the cap surface. In such an embodiment, the cap does not have, apart from the single open end, any other openings. In other possible embodiments, the cap surface is provided with one or more apertures. In these embodiments, the cap has an open end and has the one or more apertures. For example, the cap surface may comprise a cylindrical or conical sleeve, and an aperture is provided in the cylindrical or conical sleeve surface. It is also possible that the aperture is provided as an open front end of the cap surface, such that the cap has two open ends. In another example, the cap surface may comprise a sleeve, being cylindrical or conical, or partly cylindrical and partly conical, and a base plate, the base plate being connected to the sleeve at the front side of the cap. The base plate may e.g. be a flat plate mounted substantially perpendicular to the central axis of the sleeve, and may comprise one or more apertures. In any of the embodiments wherein the cap surface comprises one or more apertures, the apertures can be closed off. For example, the cap may comprise one or more lids, adapted for closing off the respective apertures, or closing the apertures may happen by filling the apertures with a material.

The end-sealing method comprises performing a first set of steps, wherein the order of particular steps may differ according to various embodiments. The end-sealing method further comprises performing a second set of steps, wherein the order of particular steps may differ according to various embodiments. Moreover, any of the steps of the second set may be performed before or after the first set, or between subsequent steps of the first step.

The first set of steps comprises a step wherein the cap is mounted with its open side onto the cut-off cable end, such that the cap surface is at least partially placed around the cable shell. Moreover, the first set of steps comprises a step wherein a first sealant is applied inside the cap. For example, the first sealant may be provided as a paste or filler. Applying the first sealant inside the cap may be done before mounting the cap onto the cable end. E.g. the first sealant is first applied to the inner side of the cap surface, or the cap is first partially filled with first sealant, and next the cap is placed over the cable end. In another embodiment, the cap is first mounted onto the cable end, after which the first sealant is brought into the inner cavity of the cap. For this purpose, the cap surface must be provided with at least one aperture, allowing for entering the first sealant e.g. by means of injection. Preferably, in mounted condition of the cap, the cap is completely filled with first sealant, i.e. the space between the transverse section of the cable end and the front side of the cap, is filled with the first sealant.

In any of the embodiments, performing the first set of steps results in the first sealant being shielded by the mounted cap, implying that the first sealant is not visible anymore in mounted condition of the cap. The shielding may be obtained due to the cap surface being a continuous, uninterrupted surface without any apertures, such that apart from mounting the cap and applying the first sealant, no additional step is required to obtain the shielding. In another embodiment, the shielding is obtained due to closing off any apertures present in the cap surface. Thus, in such embodiment, apart from mounting the cap and applying the first sealant, an additional closing step is required. Closing off may e.g. be done by arranging a lid or other element onto any of the apertures, or by filling the apertures with a material.

Furthermore, the first set of steps results in the exposed transverse section of the cable end being at least partially covered with the first sealant. The first sealant is thus applied in such a way that at least a portion of the first sealant is in contact with the exposed transverse section. Typically, the exposed ends of the one or more cores will be covered with first sealant, thereby sealing them off. In summary, the first set of steps are those steps required to cover the exposed cut-off cable end with sealant, thereby sealing the exposed end, and to shield the first sealant from the environment due to a mounted cap.

The end-sealing method further comprises performing a second set of steps. The second set of steps comprises a step wherein means for sealing are applied onto an outer surface of the cable shell and/or onto a layer covering an outer surface of the cable shell, or a step wherein means for sealing are applied onto an inner surface of the cap, or the combination of both aforementioned steps. Means for sealing are for example a second sealant, e.g. in the form of a clay, or a sealing ring, e.g. an elastic material or O-ring. A layer covering an outer surface of the cable shell is for example a tape previously arranged around a portion of the cable shell. In an embodiment, means for sealing are applied before mounting the cap with its open side over the cable end. For example, a second sealant or a sealing ring is applied to an outer surface of the cable shell, or to a layer covering an outer surface, before mounting the cap. In another example, a second sealant or a sealing ring is applied onto an inner surface of the cap, before mounting the cap. Also a combination of the two aforementioned examples is possible. In another embodiment, means for sealing are applied after mounting the cap with its open side over the cable end. For example, after mounting the cap, a gap between the cap and the cable shell is filled with a second sealant, or a sealing ring is mounted in the space between the shell and the cap surface. In yet another embodiment, means for sealing are partly applied before mounting of the cap, and partly after mounting of the cap. For example, a second sealant is applied onto the cable shell before mounting the cap, and after mounting the cap, a remaining gap between the shell and the cap surface is filled with second sealant.

Performing the second set of steps results in the mounted cap being sealed with respect to the cable shell. In summary, the second set of steps are those steps required to prevent that a gap would remain between the cable shell and the mounted gap. In this way, it is avoided water would enter via such a gap, and that the first sealant would be squeezed out via such a gap.

Execution of the first and second set of steps of the end-sealing method therefore results in a robust seal, even at the high underwater pressures. In this way, it is avoided that water would intrude the cable cores, e.g. during a pull-in operation in an offshore wind farm. In this, the first sealant effectively seals the cable cores, while the second sealant seals the cap with respect to cable shell. At the same time, the cap provides a protection of the actual sealant, thereby preventing any damages to the seal during the pull-in operation.

Moreover, the end-sealing method results in a substantial reduction of operational time to apply a seal, compared to a classical method wherein every core is sealed individually using hot or cold shrink end caps. Indeed, as the outer layers of the cable do not have to be removed or stripped to install the seal, the cable can be cut to the correct length and be sealed right away. The invented method reduces the total sealing time of one cable to about 10 to 15 minutes, thereby substantially increasing the amount of subsea cables that can be installed in a certain time span, compared to the classical method wherein about 1,5 to 2 hours of sealing time are needed per cable. Moreover, as all the layers of the cable shell stay intact during the invented sealing method, there is a reduced risk of damaging any components of the cable. Furthermore, compared to the classical method, the seal can be installed in a safer way, as it does not require open fire to apply a hot shrink.

Finally, the invention results in an easy, clean and cheap sealing method, without requiring specific chemicals or process conditions. Indeed, effective sealing of the cable cores is obtained by means of the first sealant, but as the latter is shielded by the cap, a generally applicable sealant suffices, e.g. in the form of a paste. Due to the mounted cap, the first sealant may remain in its paste form, without requiring any curing, and therefore without requiring any specific materials or conditions. The general sealant also allows for an easy application, e.g. by injection or smearing. Moreover, a wrapping element such as a tape can easily be applied around a portion of the mounted cap and cable shell, thereby avoiding any contact of the water with the sealants and preventing that any of the sealants would be squeezed out e.g. during a pulling operation. This contributes to an ecological method wherein any pollution of the water is prevented, and to a reliable method wherein the seal remains intact during the operation.

Optionally, the cap surface comprises a tapered portion, of which the section reduces in a direction away from the open end of the cap. Thus, the cap surface may have a tapered, conical or chamfered shape, or may comprise a portion having a tapered, conical or chamfered shape. The tapered shape is such that the section, and thus the cavity enclosed by the cap surface, reduces in a direction from the back side of the cap towards the front side of the cap. Such a tapered portion has the advantage that when the cable with mounted cap is arranged within a cable gripper like a Chinese finger, the tapered shape of the cap conforms to the tapered end of the cable gripper. As a result, the pull force applied on the cable gripper allows the cap to be pushed extra tight to the cable, and an amount of the first sealant will intrude the cable due to pressing of the cable gripper. Consequently, the first sealant is infiltrated into any open gaps or spaces inside the subsea cable, and will cover the full transverse section of the cable end. This contributes to obtaining an extra sturdy sealing.

Optionally, the cap surface comprises a cylindrical portion, attached to the tapered portion, the cylindrical portion having an open end corresponding to the open end of the cap. Thus in a direction from the back side of the cap towards the front side of the cap, the cap surface first comprises a cylindrical portion, adapted to be placed over the cable end, and next the tapered portion. When the cable with mounted cap is placed within a cable gripper like a Chinese finger, the shape of both the cylindrical and tapered portion, will conform to the corresponding portions of the cable gripper.

Optionally, the cap surface comprises one or more apertures, and the first set of steps comprises:
- mounting the cap with its open side onto the cut-off cable end, and subsequently supplying the first sealant to the inside of the cap via at least one of the apertures in the cap surface;
- closing-off the one or more apertures in the cap surface after applying the first sealant.
The one or more apertures may be provided at the front side of the cap surface, or at a side face thereof. The presence of the one or more apertures allows that first the cap is mounted to the cable end, and next the first sealant is brought into the cap, via the one or more apertures. For example, an injection nipple or spout may be arranged at the position of an aperture, thereby allowing to inject the first sealant into the cap. First mounting the cap has the advantage - compared to first filling the cap and next mounting it - that filling of the cap occurs gradually, thereby preventing the formation of air bubbles. Moreover, pressure may be controlled during filling, thereby obtaining the required filling degree and distribution of first sealant. Finally, it allows for a clean way of working. After applying the first sealant, the one or more apertures of the cap need to be closed off, such that the first sealant is shielded from the environment.

Optionally, the cap comprises one or more lids, and closing-off the one or more apertures in the cap surface is done by means of the one or more lids. Thus, after applying the first sealant into the cap, a lid is placed onto any corresponding aperture, thereby closing off the aperture.

Optionally, the cap is made of a rigid material, for example steel.

Optionally, the cap surface comprises a sleeve and a base plate, the base plate having a flat surface arranged substantially perpendicular to the central axis of the sleeve, and the one or more apertures are provided in the base plate. The sleeve may have a cylindrical shape, or tapered shape, or may comprise a cylindrical portion and a tapered portion. The base plate is arranged at the front side of the cap, and comprises the one or more apertures allowing for entering the first sealant.

Optionally, the first sealant is injected in the cap via the one or more apertures in the cap surface, while measuring the pressure. Measuring the pressure during injection of the first sealant allows to adapt the injection conditions during filling, and to determine when to stop injecting, thereby obtaining the optimal filling degree and distribution of first sealant. Measuring the pressure may e.g. be done by using a blow gun or pressure gun with manometer.

Optionally, the first sealant is applied by means of an injection gun. For example, a pneumatic pressure gun or blow gun may be used to inject the first sealant into the cap.

Optionally, the first set of steps results in the mounted cap being filled with the first sealant, such that at least a portion of the base plate is in contact with the first sealant. This implies that after applying the first sealant inside the sleeve, the cap is at least partially filled with the first sealant, wherein at least some of the applied first sealant is contact with the inner side of the base plate of the cap. The cap is thus completely, or almost completely filled with the first sealant, up to the base plate at the front side.

Optionally, performing the second set of steps comprises:
- providing a second sealant;
- applying an amount of second sealant onto an outer surface of the cable shell, and/or onto a layer covering an outer surface of the cable shell; and/or applying an amount of second sealant onto an inner surface of the cap,
such that after mounting the cap and applying the second sealant, the second sealant fills the gap between the cap surface and the cable shell, at least over a portion of the length. A second sealant is for example a filler or sealant in the form of a clay. The second sealant may be applied before mounting the cap with its open side over the cable end, or thereafter, or partially before and partially after mounting the cap. In any case, after applying the second sealant, it fills a gap present between the cap and the cable shell, thereby preventing water to intrude via this gap, and preventing that the first sealant would be squeezed out via such gap. Remark that without second sealant, a gap would possibly be present between the mounted cap and the cable shell, of which the length extends between the back side of the cap and the front side of the cable end. After application of the second sealant, the latter may fill that gap over its complete length, or may fill that gap only over a portion of its length.

Optionally, the second set of steps comprises:
- applying a first portion of the second sealant onto an outer surface of the cable shell, and/or onto a layer covering an outer surface of the cable shell, before mounting the cap;
- applying a second portion of the second sealant between the cap surface and the cable shell, after mounting the cap.
This implies that application of the second sealant is done in two substeps, substep A and substep B, before respectively after mounting the cap. In an embodiment, first substep A is performed, next the cap is mounted, subsequently the first sealant is applied inside the cap, and finally substep B is performed. In another embodiment, first substep A is performed, next the cap is mounted, subsequently substep B is performed, and finally the first sealant is applied inside the cap. In yet another embodiment, first substep A is performed, next the first sealant is applied inside the cap, subsequently the cap is mounted, and finally substep B is performed. Applying these two substeps has the advantage that first any grooves or irregularities in the shell or layer surface are filled, thereby allowing for proper mounting of the cap, and next any remaining gaps or spaces are filled, thereby obtaining optimal sealing of the cap with respect to the cable shell.

Optionally, the method comprises subsequently performing the steps of:
- applying a first portion of the second sealant onto an outer surface of the cable shell, and/or onto a layer covering an outer surface of the cable shell;
- mounting the cap with its open side onto the cut-off cable end;
- supplying the first sealant to the inside of the cap via one or more apertures in the cap surface;
- applying a second portion of the second sealant between the cap surface and the cable shell.
The method according to this embodiment thus requires execution of the aforementioned steps in the aforementioned order. After applying the first sealant, the one or more apertures need to be closed off. This may be done directly after applying the first sealant, or after applying the second portion of the second sealant.

Optionally, applying the first portion of the second sealant is done by means of a putty knife and/or an injection gun, and applying the second portion of the second sealant is done by means of an injection gun and/or putty knife.

Optionally, the first sealant is a non-curing sealant and/or the second sealant is a non-curing sealant. A non-curing sealant refers to a sealant which will not cure, set, or harden, and thus remains in its initial state after being applied. It may also be referred to as non-drying or non-skinning sealant, which does not dry or oxidize after being applied. The non-curing sealant is in contrast with a curing sealant. A curing sealant has a composition which allows the product to cure, set or harden under specific conditions. For example, in a curing sealant comprising a glue, the glue will set or harden such that it is not mouldable anymore, or in a curing sealant comprising a foam, the foam is hardened or set into a substantially solid material. Setting or hardening refers to become firm or solid, e.g. due to drying or a physical or chemical reaction. Curing may be triggered by specific conditions, e.g. exposure to moisture, heat or cooling, or may happen by virtue of evaporation of a component of the sealant, or due to a chemical reaction e.g. with air.

In the invented end-sealing method, when a non-curing sealant is used, this implies that after application of the sealant, and under the applied conditions of the end-sealing method, the sealant will remain in its initial state of application. Thus, during further steps of the end-sealing method, the applied sealant does not cure, hardens or sets, and keeps the form as when it was applied. For example, the first sealant may be applied in the form of an injected paste, and once being inside the cap, it remains in its paste state. For example, the second sealant may be in the form of a clay when being applied onto the cable shell, or onto any layer around the cable shell, or between the cable shell and the cap, and after being applied, it keeps its clay state. Typically, also during use of the sealed cable, e.g. during a subsequent pull-in operation, no intended curing, setting or hardening occurs, although some other changes to the sealant may happen, e.g. due to physical interaction, contact with the environment like contact with air or water, or changes in temperature.

Advantages of using a non-curing sealant are that the method does not require specific chemicals or conditions, and a reliable, reproducible seal is obtained, independent of specific process conditions. Moreover, the sealant may be applied in a clean and easy way, no time is required for curing, no stresses remaining after curing, and a non-curing sealant, e.g. under the form of a paste, may nicely fill the cap. Finally, a non-curing sealant, e.g. under the form of a paste, may intrude the cable during pulling of the cable, as it is squeezed by the cable gripper.

Optionally, the first and the second sealant each have a different composition. In particular, the first sealant may be a sealant which allows for injection, and the second sealant may be a sealant which allows to be pressed into any grooves present at the outer surface of the cable shell, or at the outer surface of a layer covering the cable shell.

Optionally, the first sealant is a non-curing sealant in the form of a paste or filler, and/or the second sealant is a non-curing sealant in the form of a clay or putty.

Optionally, the method further comprises: arranging a binding element, such as a tape, around a portion of the cable shell, before mounting the cap. The tape may e.g. be duct tape. The binding element may be arranged around the cable shell after the cable was cut to length, or before the cable is cut to length. In the latter case, the cable may be cut through the arranged binding element. Typically, the cable shell comprises armour wires, e.g. wound helically, surrounded by a protective layer of bitumen and helically wound polypropylene yarn. Upon cutting the cable, the shell tends to expand and to fall apart. Arranging a binding element around the cable shell allows to keep the cable shell strings together, thereby facilitating mounting of the cap onto the cut-off cable end.

Optionally, the second sealant, or a portion thereof, is applied onto the arranged binding element, before mounting the cap.

Optionally, the method comprises subsequently performing the steps of:
- arranging a binding element, such as a tape, around a portion of the cable shell;
- applying a first portion of the second sealant onto the arranged binding element;
- mounting the cap with its open side onto the cut-off cable end;
- supplying the first sealant to the inside of the cap via one ore more apertures in the cap surface;
- applying a second portion of the second sealant between the cap surface and the arranged binding element.

Optionally, the end-sealing method comprises: arranging a wrapping element, such as a tape, around a portion of the mounted cap and a portion of the cable shell. The tape may e.g. be a PVC tape. Typically, the wrapping element is arranged around the mounted cap, after the gap between the cap and cable shell has been filled with second sealant or other means for sealing; the wrapping element is thus arranged after applying the second sealant or other means for sealing, and after mounting the cap. Arranging such a wrapping element ensures that the cap remains in place, and is not damaged, when the cable is placed inside a cable gripper during a cable lay operation. It also prevents that sealant would be squeezed out during pulling and would end up in the water.

Optionally, the end-sealing method comprises subsequently performing the steps of:
- applying a first portion of the second sealant onto an outer surface of the cable shell, and/or onto a layer covering an outer surface of the cable shell;
- mounting the cap with its open side onto the cut-off cable end;
- supplying the first sealant to the inside of the cap via one or more apertures in the cap surface;
- applying a second portion of the second sealant between the cap surface and the cable shell;
- arranging a wrapping element, such as a tape, around a portion of the mounted cap and a portion of the cable shell.

According to a second aspect of the present invention, there is provided an installation method for a subsea transmission cable, the installation method comprising:
- performing the end-sealing method according to the first aspect of the invention, resulting in a sealed transmission cable;
- subsequently using the sealed transmission cable in a subsea cable laying operation.
A subsea cable laying operation is an operation wherein one or more transmission cables are installed underwater, e.g. by lying them on the seabed, and/or moving them over the seabed or in the water, and/or by burying them in the seabed. For example, the subsea cable laying operation is a pull-in operation for building an infield cable network in an offshore wind farm.

Optionally, the installation method comprises subsequently performing the steps of:
- providing a cable grip, the cable grip adapted to receive the transmission cable and provided with a pulling element;
- performing the end-sealing method according to the first aspect of the invention, resulting in a sealed transmission cable;
- placing the sealed transmission cable within the cable grip;
- using the sealed transmission cable in a subsea cable laying operation, wherein pulling the cable is done by means of the cable grip.
A cable grip, also referred to as cable sock, cable stocking or Chinese finger, is a device allowing to pull a cable or other cylindrical object. Typically, it comprises a sleeve adapted to receive the cable or object, and a pulling element provided at one end of the sleeve. The sleeve typically comprises a meshed structure that grips around the cable shell. The pulling element is for example a pulling eye or hook.

Optionally, the installation method comprises subsequently performing the steps of:
- providing a cable grip, the cable grip comprising an open end and an opposing tapered end provided with a pulling element;
- performing the end-sealing method according to the first aspect of the invention, wherein the cap surface comprises a tapered portion, of which the section reduces in a direction away from the open end of the cap, the performed end-sealing method resulting in a sealed transmission cable;
- placing the sealed transmission cable within the cable grip, such that the tapered portion of the cap is arranged within the tapered end of the cable grip.
The cable grip is for example a Chinese finger. The cable grip comprises a sleeve, e.g. having a meshed structure, extending between a first and a second side. At the first side, the cable grip has an open end, adapted to place the cable inside the sleeve of the cable grip. At the second side, the sleeve comprises a tapered part, with a section reducing in a direction away from the open end. The end of the sleeve, at the second side, is provided with a pulling element, e.g. a pulling eye or hook. When the sealed transmission cable, carrying the mounted cap, is placed inside the sleeve of the cable grip, the tapered shape of the cap conforms to the tapered shape of the cable grip. This has the advantage that the pull force applied on the cable gripper allows the cap to be pushed extra tight to the cable, and an amount of the first sealant will intrude the cable due to pressing of the cable gripper. Consequently, the first sealant is infiltrated into any open gaps or spaces inside the subsea cable, and will cover the full transverse section of the cable end. This contributes to obtaining an extra sturdy sealing.

According to a third aspect of the present invention, there is provided a subsea cable laying operation, the subsea cable laying operation comprising:
- performing the end-sealing method according to the first aspect of the invention, wherein the subsea transmission cable is a subsea power cable, resulting in a sealed subsea power cable;
- subsequently using the sealed subsea power cable during a subsea pull-in operation in an offshore wind farm.
A pull-in operation is typically performed when building an infield cable network of an offshore wind farm. Such infield cables, also referred to as inter array cables, subsea power cables or submarine power cables, are laid between the wind turbines, and connect the wind turbines to the offshore transformer station. During the pull-in operation, the wind turbines or substation are provided with the submarine power cable. Before this pull-in operation, the cables are cut to size, and sealed using the invented end-sealing method.

According to a fourth aspect of the present invention, there is provided a sealed transmission cable, suitable for subsea installation, the sealed transmission cable comprising:
- one or more cores encased by an outer shell, the cores suitable for transmission of power or signals,
- a cap mounted onto an end of the cable, wherein
   ∘ the cap comprises a cap surface and has an open end at least at one side;
   ∘ the cap is mounted with its open side onto the cable end, such that the cap surface is at least partially placed around the cable shell;
   ∘ the mounted cap is at least partially filled with a first sealant, such that the first sealant at least partially covers the transverse section of the cable end,
      wherein the first sealant is shielded by the mounted cap, due to any aperture in the cap surface or the cap surface being closed off or the cap surface not having any such aperture; and
   ∘ the mounted cap is sealed with respect to the cable shell by sealing means provided between the cable shell and the cap surface.

### Brief Description of the Drawings

Fig. 1 shows a cut-off end of a subsea transmission cable.
Fig. 2 gives a 3D view of a cap, according to an embodiment of the invention.
Fig. 3 gives a 3D view of a sealed subsea transmission cable, provided with a mounted cap, according to an embodiment of the invention.
Fig. 4 gives a transparent view of the sealed subsea transmission cable shown in Fig. 3.
Fig. 5 gives a side view of sealed subsea transmission cable, provided with a mounted cap, according to an embodiment of the invention.
Fig. 6 gives a transparent view of the sealed subsea transmission cable shown in Fig. 5.
Fig. 7 to Fig. 12 illustrate subsequent steps comprised in an end-sealing method, according to an embodiment of the invention, thereby obtaining a sealed transmission cable.
Fig. 13 illustrates how the sealed transmission cable of Fig. 12 is placed in a cable grip, for pulling the cable.

### Detailed Description of Embodiment(s)

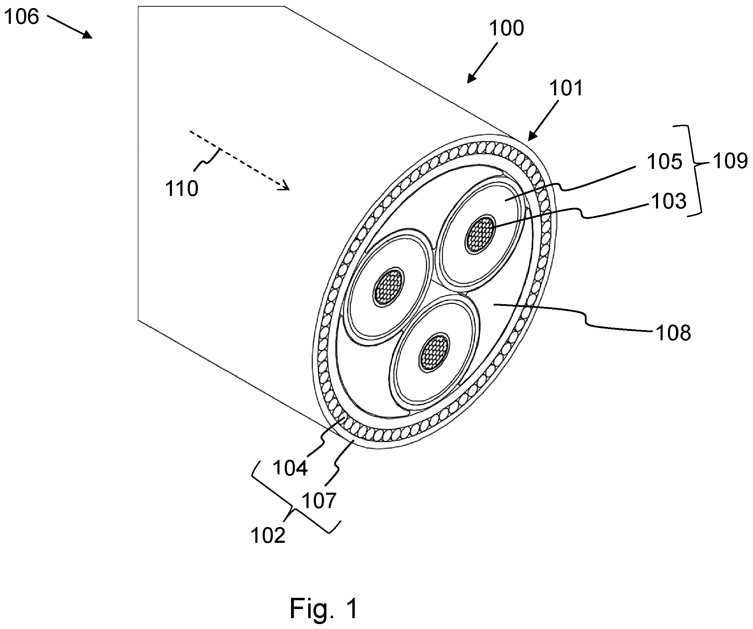

Fig. 1 shows an end of a subsea transmission cable 100. In particular, it shows a three-core subsea power cable 106, comprising three conductor cores 109. The cable has been cut to length, such that it comprises a cut-off end 100 with an exposed transverse section 101. The cable 106 extends according to a length direction 110, and the exposed transverse section 101 is found at the front side of the cable 106. The individual conductors 103, e.g. made of copper or Aluminium, each are surrounded by layers 105 of insulation and sheathing. The three cores 109 are enclosed by a cable shell 102, which comprises armour 104, e.g. provided as galvanised steel wires. Furthermore, the cable shell 102 comprises a protective layer 107 around the armour 104, which e.g. comprises bitumen and helically wound polypropylene yarn, or is provided as a smooth PE sheet.

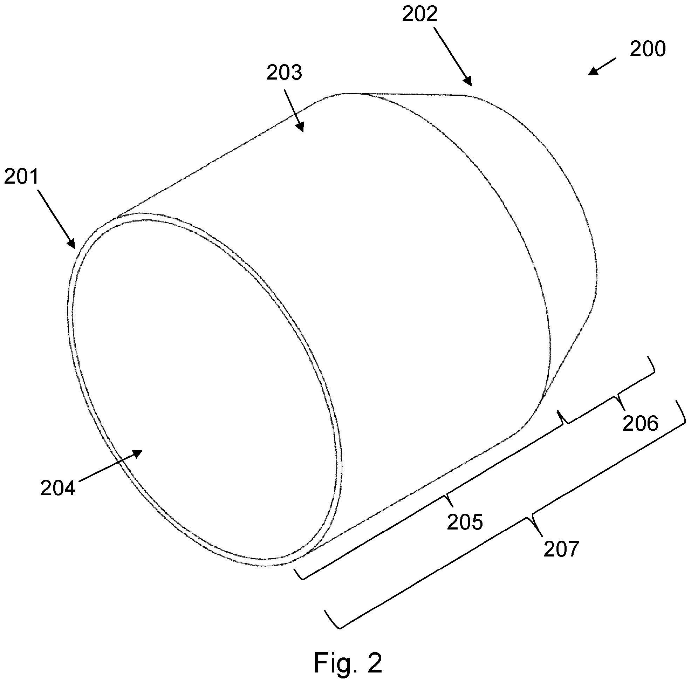

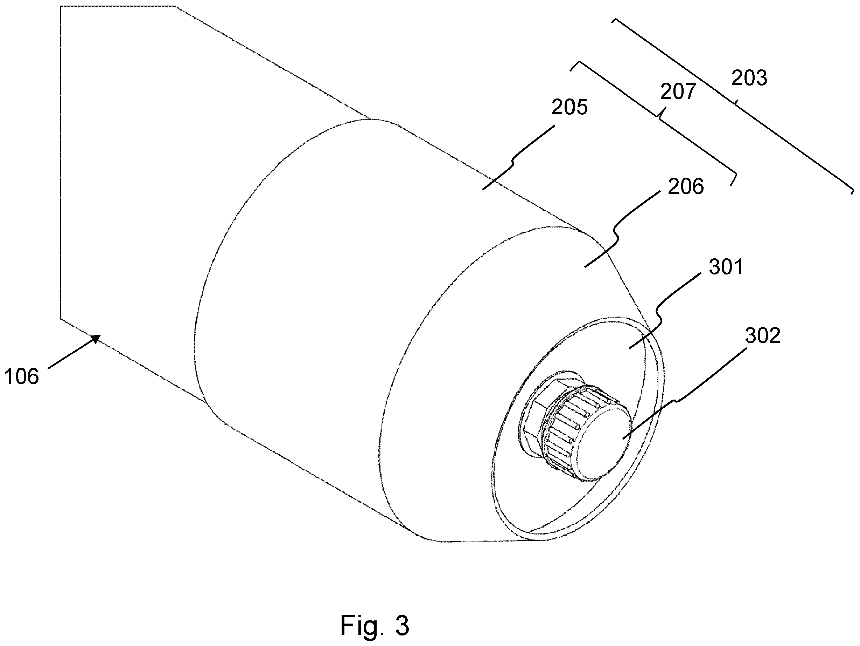

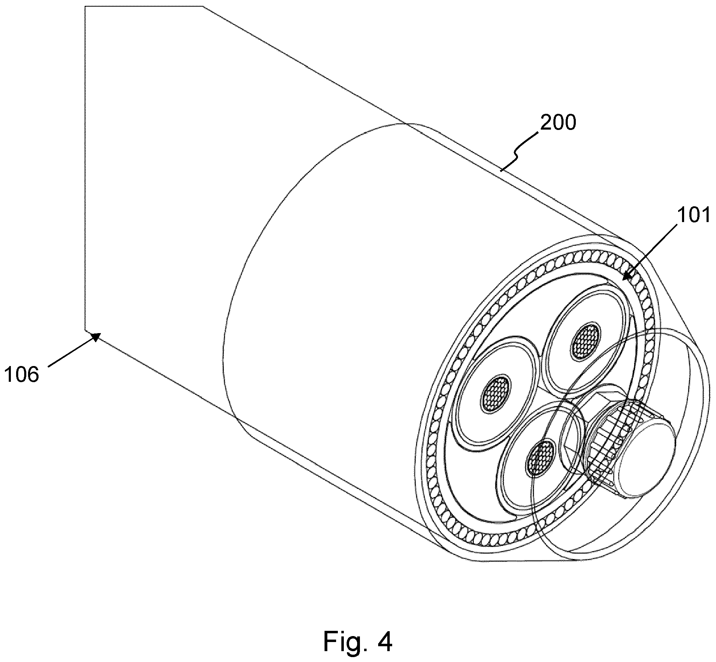

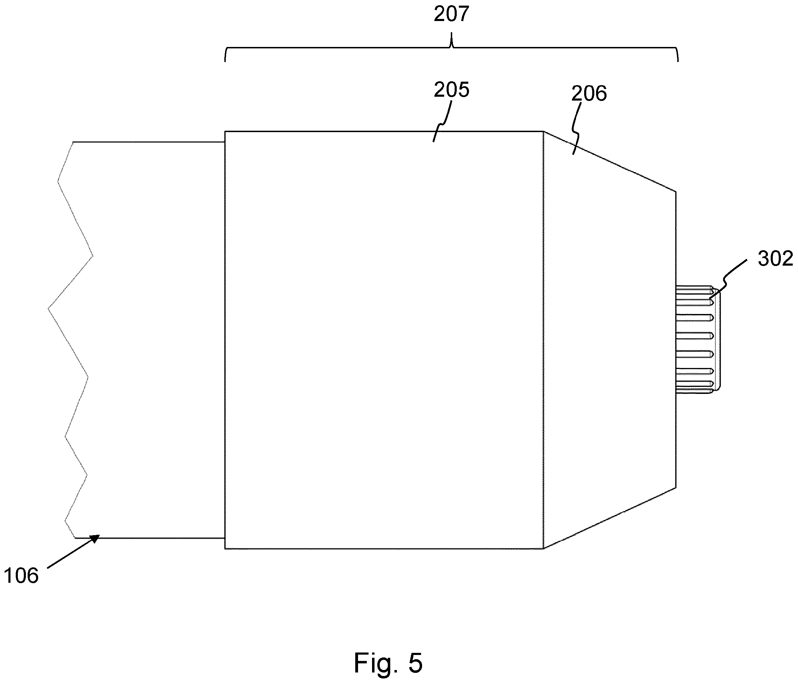

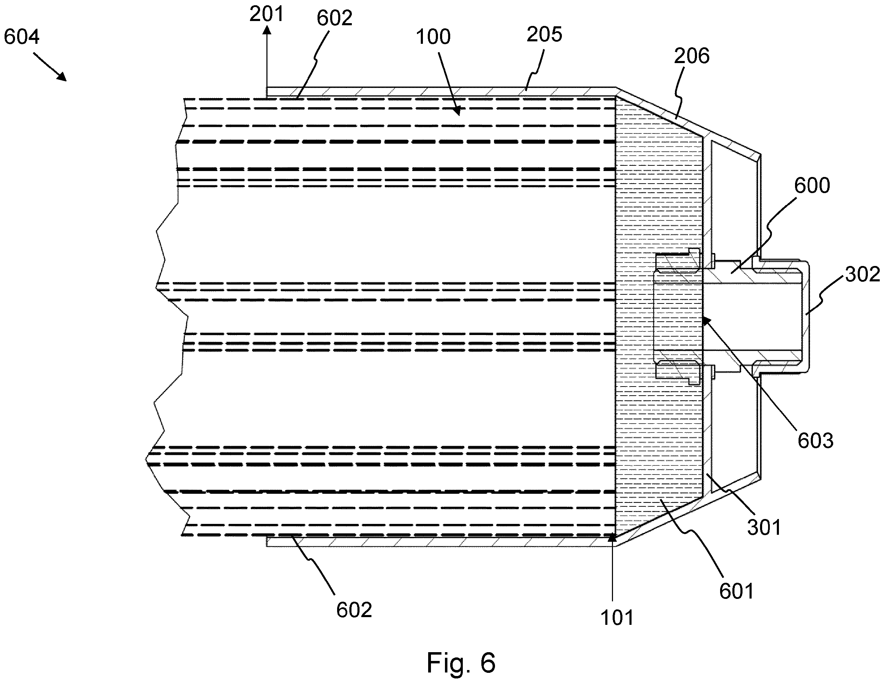

The end-sealing method according to the invention makes use of a cap. Fig. 2 shows an embodiment of such a cap 200. The cap 200 comprises a cap surface 203, extending between a first side or back side 201 and a second side or front side 202. The cap has an open end 204, provided at its back side 201. The cap surface 203 comprises a hollow sleeve 207, which is composed of a cylindrical portion 205 and a tapered portion 206. The open end 204 allows the cap 200 to be placed over the cable end 100, as is shown in Fig. 3 to Fig. 6. Fig. 3 shows that the cap surface, besides the sleeve 207, comprises a base plate 301, at the front side of the cap. The base plate is a flat plate, arranged perpendicular to the central axis of the sleeve 207. The cap surface 203, composed of the cylindrical sleeve portion 205, tapered sleeve portion 206, and base plate 301, thus encloses an inner cavity, in unmounted condition of the cap 200. The base plate 301 comprises an aperture 603, which in the figures is closed off by a lid 302. In the shown embodiment, the 302 lid is provided as a screw top or screw cap. Fig 6 further shows that the cap 200 comprises a nipple or spout 600, arranged at the position of the aperture 603, such that the nipple opening connects to the aperture 603 of the base plate 301. Arranging the lid 302 onto the nipple 600 thus closes of the nipple opening as well as the aperture 603.

Fig 6 further illustrates a sealed transmission cable 604, obtained with an end-sealing method according to an embodiment of the invention. The cap 200 is mounted, such that the cylindrical sleeve portion 205 is placed over the cable end 100, thereby covering an end portion of the cable shell 102, while the tapered portion extends beyond the front end of the cable. In the sealed cable 604, a first sealant 601 fills the space between the exposed transverse section 101 of the cable end and the base plate 301 of the cap. In this way, the exposed cable cores 109 are covered by the first sealant 601. The figure shows that the first sealant fills the complete space at the front side of the cap 200, thereby reaching until the base plate 301. It is also possible that space available within the nipple 600 would be completely filled with first sealant 601, thereby reaching until the lid 302. The first sealant 601 is shielded from the environment, by means of the tapered sleeve portion 206, the base plate 301, and due to the base plate 301 being closed off by the lid 302.

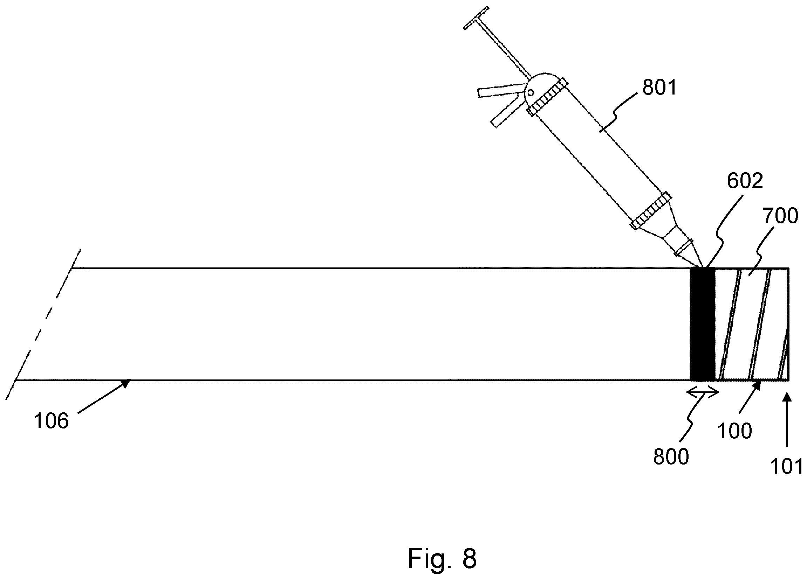

Moreover, a second sealant 602 is present between the cable shell 102 and the cap 200, in particular between a binding element 700 arranged around a portion of the cable shell 102 and the cylindrical sleeve portion 205 of the cap. The binding element 700, provided as a tape, is illustrated in Fig. 8. Fig. 8 further shows that the second sealant 602 is applied onto tape 700 over a length 800. Thus, sealant 602 is applied onto tape covering an outer surface 800 of the cable shell 102, wherein the outer surface 800 does not reach until the front side 101 of the cable. Without the second sealant 602, a gap would be present between the mounted cap 200 and the taped cable end, which may extend over the length between the back side 201 of the cap 200 and the transverse section 101 of the cut-off cable end 100. Due to the second sealant 602, a portion of that gap is filled, over a length 800. Accordingly, the mounted cap 200 is sealed with respect to the cable shell 102, thereby preventing water to intrude via the gap, and preventing that the first sealant 601 would be squeezed out via such gap during a pulling operation.

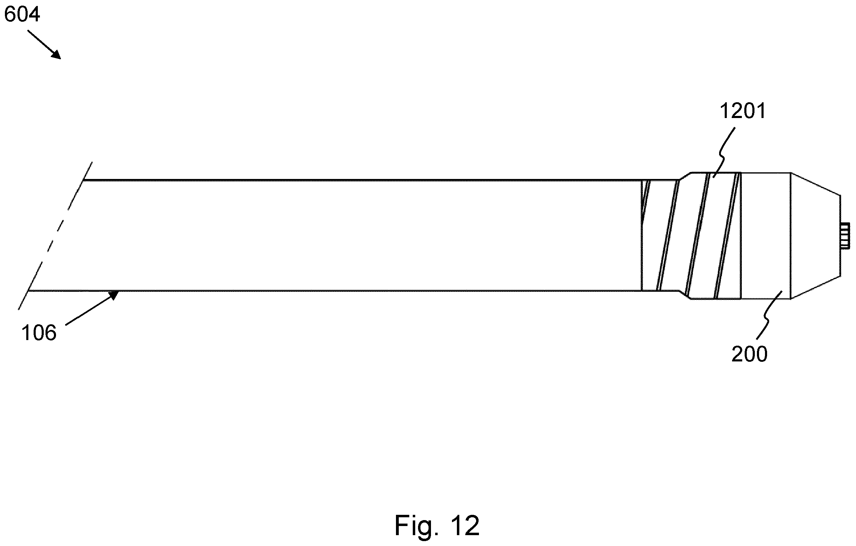

Remark that the sealed transmission cable 604 may further comprise a wrapping element 1201, arranged around a portion of the mounted cap 200 and a portion of the cable shell 102. Such wrapping element 1201 is illustrated in Fig. 12, and is not represented in Fig. 6.

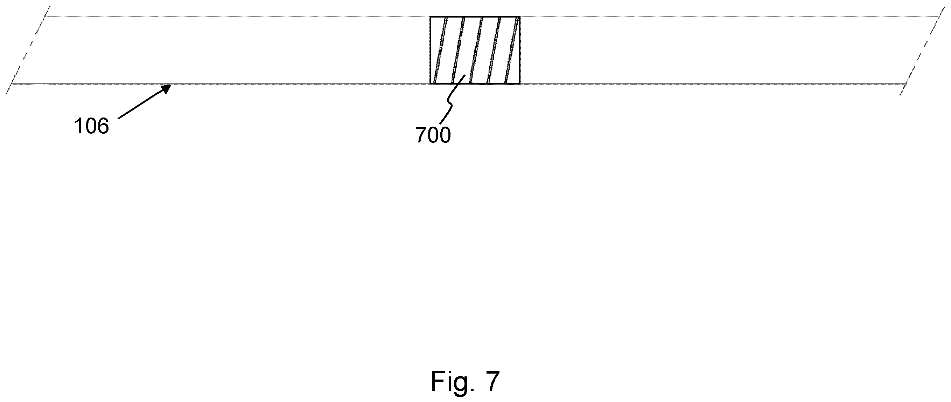

Fig. 7 to Fig. 12 illustrate subsequent steps of an end-sealing method according to one possible embodiment, thereby obtaining the sealed transmission cable 604.

In a first step, illustrated in Fig. 7, there is provided a subsea power cable 106. Moreover, a binding element 700, provided as duct tape 700, is arranged around a portion of the cable shell 102.

Next, the cable 106 is cut to length, wherein it is cut through the binding element 700, or at the edge thereof, thereby obtaining a cut-off end 100, with an exposed transverse section 101, as is illustrated in Fig. 8. Fig. 8 further shows that a first portion of a second sealant 602 is applied onto the tape 700 and/or the outer surface of the cable shell, over a length 800. The second sealant may be provided in the form of a clay. If any grooves are present in the outer surface of the shell, the clay may be pressed into such grooves. In the shown embodiment, the second sealant 602 is applied by means of an injection gun; in another embodiment it may be applied by means of a putty knife.

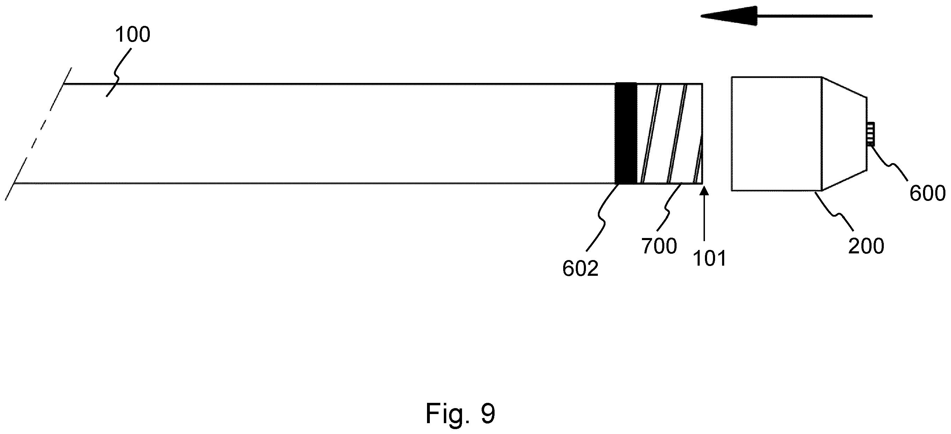

Fig. 9 shows that in a next step, the cap 200, as was shown in Fig. 2, is mounted onto the cut-off cable end 101. In particular, the open end 204 of the cap is shifted over the cable shell, in particular over the tape 700 and sealant 602, thereby obtaining the mounted cap as shown in Fig. 3.

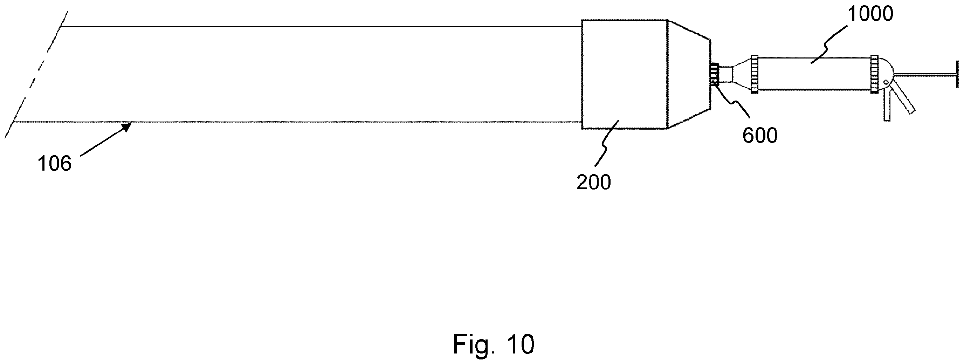

After mounting the cap 200, the first sealant 601 is applied inside the cap 200, as is illustrated in Fig. 10. For this purpose, the lid 302 is removed, such that the nipple 600 and aperture 603 are opened. In the shown embodiment, the first sealant is injected into the cap 200 by means of an injection gun 1000. The first sealant is e.g. a sealant in the form of a paste, thereby allowing for easy injection. During injection of the first sealant 601, the pressure may continuously be measured, e.g. by means of a manometer being arranged at the pressure gun 1000. After injecting the first sealant 601, the space inside the mounted cap 200 is filled with first sealant 601, as was shown in Fig. 6.

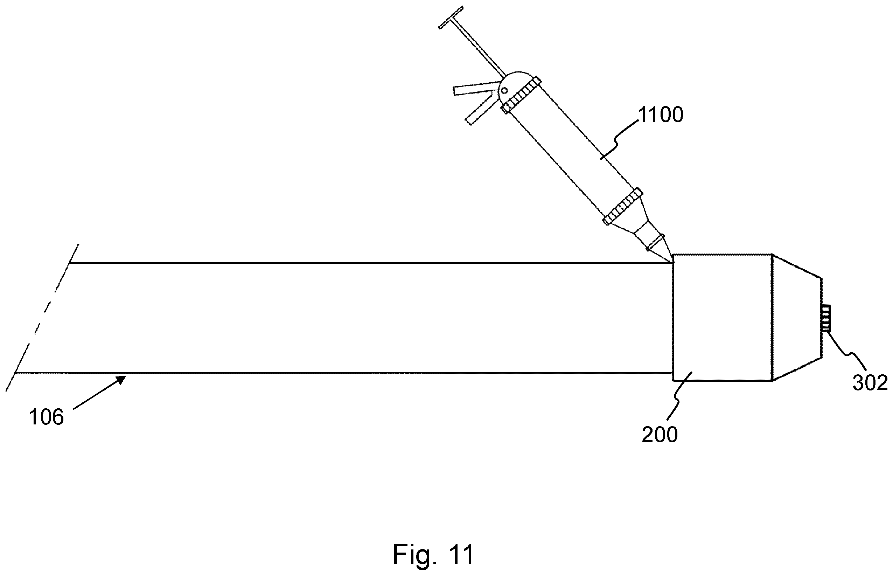

In a next step, illustrated in Fig. 11, a second portion of the second sealant 602 is applied between the taped cable shell and the cap 200. The second sealant used in this step is the same type of product as used in the step of Fig. 8. In the shown embodiment, the second sealant is injected in the gap between cable shell and cap by means of an injection gun 1100. In addition, a putty knife may be used to press all the sealant in the space between the end cap 200 and cable shell 102.

Finally, Fig. 12 illustrates a next step, wherein a wrapping element 1201, e.g. provided as a tape, is arranged around a portion of the mounted cap 200 and a portion of the taped cable shell.

Other embodiments of the end-sealing method are possible, wherein the aforementioned steps may be applied in a different order. Moreover, application of the sealants may be done in a different way, according to various embodiments. For example, instead of injecting the first sealant 601 after mounting the cap 200, it may be applied inside the cap before mounting the cap. In another example embodiment, the second sealant 602 is only applied before mounting the cap 200, or only after mounting the cap 200. Furthermore, the design of the cap may differ according to various embodiments.

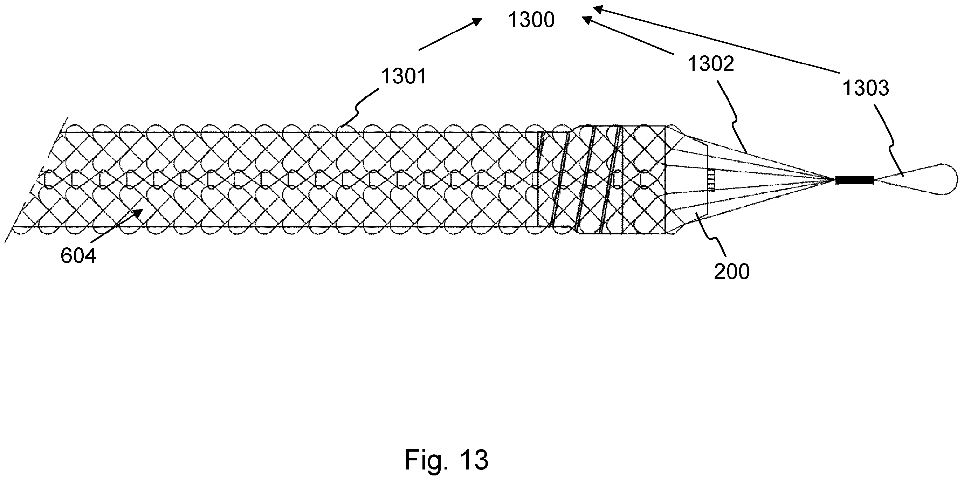

Finally, Fig. 13 illustrates the use of the sealed subsea power cable 604. The figure shows that the sealed cable 604 is placed inside a cable grip 1300, namely a Chinese finger 1300. The Chinese finger 1300 comprises a sleeve 1301 provided as a meshed structure. The sleeve 1301 is connected to strings 1302, the latter defining a tapered front side of the cable gripper. The figure shows that the shape of the tapered sleeve portion 206 of the cap 200 conforms to the tapered front side of the Chinese finger. The cable grip 1300 further comprises a pulling eye 1303, arranged at its front end, adapted for pulling the cable. In this way, the sealed subsea power cable 604, placed in the cable grip 1300, may be used during a subsea pull-in operation in an offshore wind farm. Due to the tapered end of the cap 220 and the force applied on the cable grip, the cap will be pushed onto the cable end when pulling the Chinese finger via eye 1303. As a result, an amount of the first sealant 601 will intrude the cable due to pressing of the cable gripper 1300. Consequently, the first sealant 601 is infiltrated into any open gaps or spaces inside the subsea cable, and will cover the full transverse section of the cable end.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An end-sealing method for a subsea transmission cable, the method comprising:
- providing a cable (106) suitable for subsea installation, comprising one or more cores (109) encased by an outer shell (102), the cores (109) suitable for transmission of power or signals, and the cable (106) being cut to length such that it comprises a cut-off end (100) with an exposed transverse section (101);
- providing a cap (200), the cap (200) comprising a cap surface (203) and having an open end (204) at least at one side;
- performing a first set of steps, comprising:
∘ mounting the cap (200) with its open side (204) onto the cut-off cable end (100), such that the cap surface (203) is at least partially placed around the cable shell (102);
∘ applying a first sealant (601) inside the cap (200);
wherein the first set of steps results in the first sealant (601) being shielded by the mounted cap (200), due to closing off any aperture (603) in the cap surface (203) or the cap surface (203) not having any such aperture, and the transverse section (101) of the cut-off end (100) being at least partially covered with the first sealant (601);
- performing a second set of steps, comprising:
∘ applying means for sealing (602) onto an outer surface (800) of the cable shell (102), and/or onto a layer (700) covering an outer surface (800) of the cable shell (102); and/or
∘ applying means for sealing onto an inner surface of the cap (200);
wherein any of the steps of the second set is performed before or after the first set, or between subsequent steps of the first step, thereby resulting in the mounted cap (200) being sealed with respect to the cable shell (102).

2. An end-sealing method according to claim 1,
wherein the cap surface (203) comprises a tapered portion (206), of which the section reduces in a direction away from the open end (204) of the cap (200).

3. An end-sealing method according to any of the preceding claims,
wherein the cap surface (203) comprises one or more apertures (603), and
wherein the first set of steps comprises:
- mounting the cap (200) with its open side (204) onto the cut-off cable end (100), and subsequently supplying the first sealant (601) to the inside of the cap (200) via at least one of the apertures (603) in the cap surface (203);
- closing-off the one or more apertures (603) in the cap surface after applying the first sealant (601).

4. An end-sealing method according to any of the preceding claims,
wherein the cap (200) comprises one or more lids (302), and closing-off the one or more apertures (603) in the cap surface (203) is done by means of the one or more lids (302).

5. An end-sealing method according to any of the preceding claims,
wherein the cap (200) is made of a rigid material, for example steel.

6. An end-sealing method according to any of the preceding claims,
wherein performing the second set of steps comprises:
- providing a second sealant (602);
- applying an amount of second sealant (602) onto an outer surface (800) of the cable shell (102), and/or onto a layer (700) covering an outer surface (800) of the cable shell (102); and/or applying an amount of second sealant (602) onto an inner surface of the cap (200),
such that after mounting the cap (200) and applying the second sealant (602), the second sealant (602) fills the gap between the cap surface (203) and the cable shell (102), at least over a portion (800) of the length.

7. An end-sealing method according to claim 6,
wherein the second set of steps comprises:
- applying a first portion of the second sealant (602) onto an outer surface (800) of the cable shell (102), and/or onto a layer (700) covering an outer surface (800) of the cable shell (102), before mounting the cap (200);
- applying a second portion of the second sealant (602) between the cap surface (203) and the cable shell (102), after mounting the cap (200).

8. An end-sealing method according to claim 7,
wherein the method comprises subsequently performing the steps of:
- applying a first portion of the second sealant (602) onto an outer surface (800) of the cable shell (102), and/or onto a layer (700) covering an outer surface (800) of the cable shell (102);
- mounting the cap (200) with its open side (204) onto the cut-off cable end (100);
- supplying the first sealant (601) to the inside of the cap (200) via one or more apertures (603) in the cap surface (203);
- applying a second portion of the second sealant (602) between the cap surface (203) and the cable shell (102).

9. An end-sealing method according to any of the preceding claims,
wherein the first sealant (601) and the second sealant (602) both are a non-curing sealant.

10. An end-sealing method according to claim 9,
wherein the first sealant (601) is a non-curing sealant in the form of a paste or filler, and/or the second sealant (602) is a non-curing sealant in the form of a clay or putty.

11. An end-sealing method according to any of the preceding claims,
wherein the method further comprises: arranging a binding element (700), such as a tape, around a portion of the cable shell (102), before mounting the cap (200).

12. An end-sealing method according to any of the preceding claims,
wherein the end-sealing method comprises: arranging a wrapping element (1201), such as a tape, around a portion of the mounted cap (200) and a portion of the cable shell (102).

13. An installation method for a subsea transmission cable, the installation method comprising subsequently performing the steps of:
- providing a cable grip (1300), the cable grip (1300) comprising an open end and an opposing tapered end (1302) provided with a pulling element (1303);
- performing the end-sealing method according to any of the preceding claims, wherein the cap surface (203) comprises a tapered portion (206), of which the section reduces in a direction away from the open end (204) of the cap (200), the performed end-sealing method resulting in a sealed transmission cable (604);
- placing the sealed transmission cable (604) within the cable grip (1300), such that the tapered portion (206) of the cap (200) is arranged within the tapered end (1302) of the cable grip (1300).

14. A subsea cable laying operation, comprising:
- performing the end-sealing method according to any of the claims 1 to 12, wherein the subsea transmission cable (106) is a subsea power cable, resulting in a sealed subsea power cable (604);
- subsequently using the sealed subsea power cable (604) during a subsea pull-in operation in an offshore wind farm.

15. A sealed transmission cable (604) suitable for subsea installation, comprising:
- a cut-off cable end (100), comprising a transverse section (101);
- one or more cores (109) encased by an outer shell (102), the cores (109) suitable for transmission of power or signals,
- a cap (200) mounted onto an end (100) of the cable, wherein
∘ the cap (200) comprises a cap surface (203) and has an open end (204) at least at one side;
∘ the cap (200) is mounted with its open side (204) onto the cable end (100), such that the cap surface (203) is at least partially placed around the cable shell (102);
∘ the mounted cap (200) is at least partially filled with a first sealant (601), such that the first sealant (601) at least partially covers the transverse section (101) of the cable end (100),
wherein the first sealant (601) is shielded by the mounted cap (200), due to any aperture (603) in the cap surface (203) being closed off or the cap surface (203) not having any such aperture (603); and
∘ the mounted cap (200) is sealed with respect to the cable shell (102) by sealing means (602) provided between the cable shell (102) and the cap surface (203).
